# EUROPÄISCHE PATENTSCHRIFT

(11) **EP 1 408 630 B1**
(45) Veröffentlichungstag und Bekanntmachung des Hinweises auf die Patenterteilung: **08.11.2006**
(21) Anmeldenummer: 03020735.1
(22) Anmeldetag: 12.09.2003
(51) Int. Cl.: H04B 10/10, G06F 1/32

(54) **Verfahren zur optischen Übertragung**
Optical Transmission Method
Procède de transmission d'un signal optique

(30) Priorität: 09.10.2002 DE 10247064
(43) Veröffentlichungstag der Anmeldung: 14.04.2004
(73) Patentinhaber: Techem Energy Services GmbH, 65760 Eschborn (DE)
(72) Erfinder: Hansing, Martin, Dipl.-Inf., 65931 Frankfurt am Main (DE)
(74) Vertreter: KEIL & SCHAAFHAUSEN Patentanwälte

(56) Entgegenhaltungen:
- EP-A- 0 772 307
- EP-A- 1 089 466
- EP-A- 1 204 226
- PATENT ABSTRACTS OF JAPAN Bd. 1997, Nr. 12, 25. Dezember 1997 (1997-12-25) & JP 09 224069 A (NEC ENG LTD), 26. August 1997 (1997-08-26)

## Beschreibung

Die vorliegende Erfindung betrifft ein Verfahren zur optischen Übertragung von binären Daten zwischen zwei Kommunikationseinheiten auf einem optischen Datenübertragungskanal, insbesondere zum Aufwecken einer Kommunikationseinheit bspw. zur Initiierung einer Kommunikation zwischen den Kommunikationseinheiten, bei dem innerhalb eines Schritttaktes Leuchtimpulse bzw. keine Leuchtimpulse ausgesendet werden. Im Besonderen dient das erfindungsgemäße Verfahren als Aufweckverfahren für eine Kommunikationseinheit, insbesondere um anschließend eine Kommunikation zwischen beiden Kommunikationseinheiten durchzuführen. Das Verfahren ist jedoch auch dann anwendbar, wenn die zweite Kommunikationseinheit nach dem Aufwachen andere Tätigkeiten einleiten soll, bspw. das Durchführen einer Messung.

Ein solches optisches Kommunikationsverfahren kann besonders vorteilhaft zur stromsparenden optischen Datenübertragung zwischen Servicegeräten (Notebooks, PDAs, Palmtops, etc., jeweils mit geeigneter Software) und Hausautomationskomponenten als Endgeräten (zwecks Inbetriebnahme und Konfiguration) oder Geräten zur Verbrauchsdatenerfassung (zwecks Inbetriebnahme, Konfiguration und Ablesung) verwendet werden, ist jedoch nicht auf diese Anwendungsfälle beschränkt, sondern von allen insbesondere batteriebetriebenen Endgeräten sinnvoll nutzbar, die eine lange Batterielebensdauer erzielen müssen und eine optische Kommunikationsschnittstelle bereitstellen. Das Verfahren ist besonders vorteilhaft auch auf (Service-)Geräte mit eingebauter Infrarotschnittstelle, bspw. einer IrDA-Schnittstelle, anwendbar, da es diese für die genannten Anwendungsfälle nutzbar macht.

Zur Zeit werden bei den genannten Anwendungen fast ausschließlich proprietäre Verfahren und Schnittstellen zur Auslesung oder Konfiguration von Verbrauchserfassungsgeräten verwendet. Darunter befinden sich optische Schnittstellen, die besonders kostengünstig in batteriebetriebenen Endgeräten implementierbar sind. Daneben gibt es Infrarotschnittstellenstandards aus dem Bereich mobiler Elektronikanwendungen (Handy, Notebooks, PDAs, Palmtops), wie beispielsweise IrDA. IrDA beschreibt eigene komplexe Kommunikationsverfahren über mehrere Protokollschichten hinweg und stellt damit vergleichsweise hohe Anforderungen an die Leistungsfähigkeit der Hardware. Eine weitere bekannte IR-optische Schnittstelle aus dem Anwendungsbereich der Verbrauchserfassungsgeräte ist die sog. ZVEI-Schnittstelle, wie sie in der EN 61107 beschrieben wird.

Aus der EP 0 772 307 A1 ist ein Kommunikationsprotokoll bekannt, das in einem Halb-Duplex-Verfahren abläuft und insbesondere für eine Infrarot-Übertragung geeignet ist. Die vorgeschlagene Kommunikation sieht vor, bei einer bestehenden Kommunikationsverbindung regelmäßig Steuerungsnachrichten auszusenden, die für das Aufrechterhalten der Kommunikation notwendig sind. Sofern keine Daten übertragen werden sollen, können die beteiligten Geräte zur Energieeinsparung in einen Schlafmodus versetzt werden. Aus diesem Schlafmodus können sie durch Empfang einer Aufweckfolge geweckt werden, die von dem anderen Kommunikationspartner ausgesendet wird. Der Empfang einer Aufweckfolge wird durch die Aussendung einer Bestätigungssequenz bestätigt. Die Länge der Aufweckimpulsfolge ist zeitlich länger als der Abstand zwischen zwei kurzen Empfangszeitfenstern eines Kommunikationspartners im Schlafmodus. Der Aufweckimpulsfolge folgt dann eine Pause, um dem aufgeweckten Kommunikationspartner eine Synchronisation zu ermöglichen.

Ein ähnliches Kommunikationskonzept liegt der EP 1 089 446 A1 zugrunde, bei dem während einer bestehenden Kommunikationsverbindung regelmäßig Datenanforderungs- und entsprechende Bestätigungssignale ausgetauscht werden. Sofern die Kommunikationsverbindung unterbrochen wird, sendet ein Kommunikationspartner Anforderungssignale zum Neuaufbau einer Kommunikationsverbindung aus. Nach dem vollständigen Empfang eines Anforderungssignals antwortet der angerufene Kommunikationspartner, wobei der anrufende Kommunikationspartner die Aussendung der Anforderungssignale bis zu einer Antwort des angerufenen Kommunikationspartners wiederholt.

Nachteilig bei diesen bekannten Verfahren ist insbesondere der hohe Stromverbrauch bei der Initiierung einer Kommunikation. Das originäre IrDA-Kommunikationsverfahren oder auch andere Kommunikationsverfahren erfordern einen komplexen Protokollstack und sind daher für Geräte mit eingeschränkten Hardware-Ressourcen, bspw. Verbrauchserfassungsgeräte wie elektronische Heizkostenverteiler und elektronische Wasser- und Wärmezähler, zu aufwendig. Außerdem sind sie bei Geräten, die an die Bedürfnisse eines extrem geringen Stromverbrauchs angepasst sind, nicht vernünftig einsetzbar, da aufgrund der komplexen Protokollstruktur vergleichsweise lange Aufweckzeiten notwendig sind, während der der Empfänger eines batteriebetriebenen Endgeräts mit Strom versorgt werden muss. Auf der Servicegeräteseite werden außerdem spezielle Zusatzkomponenten (z. B. ein spezieller Optokopf oder Kontaktauflagen, etc.) benötigt, um eine Punkt-zu-Punkt-Kommunikation mit den auszulesenden bzw. zu konfigurierenden Endgeräten herzustellen. Die Nachteile der erwähnten ZVEI-Schnittstelle gemäß EN 61107 liegen darin, dass ein Leuchtimpuls über die gesamte Bitdauer leuchtet, was einen hohen mittleren Leuchtstrom erfordert und zu einem hohen Stromverbrauch führt. Weitere

Nachteile liegen darin, dass die Übertragungsgeschwindigkeit sehr niedrig ist, dass ein spezieller optischer Auslesekopf benötigt wird, dass die Reichweite minimal ist und dass zum Initiieren der Kommunikation dem Datenpaket immer eine Aufwecksequenz von 2,2 Sekunden Dauer vorangestellt werden muss. Allein der letztgenannte Nachteil macht die ZVEI-Schnittstelle ungeeignet für eine zügige optische Ablesung von Verbrauchswerten.

Die Aufgabe der vorliegenden Erfindung liegt darin, eine einfach und schnell initiierbare optische Übertragung vorzuschlagen, die zudem besonders stromsparend ist und sich insbesondere für batteriebetriebene Endgeräte eignet.

Diese Aufgabe wird bei einem Verfahren der eingangs genannten Art mit den Merkmalen des Anspruchs 1 insbesondere dadurch gelöst, dass eine erste Kommunikationseinheit als Initiator der Kommunikation eine optische Aufweckimpulsfolge aussendet, wobei die erste Kommunikationseinheit während des Sendens der optischen Aufweckimpulsfolge für optische Antwortimpulse der auf die Aufweckimpulsfolge reagierenden zweiten Kommunikationseinheit empfangsbereit ist und bei deren Empfang das Aussenden der Aufweckimpulsfolge abbricht. Der besondere Vorteil dieser erfindungsgemäßen Lösung liegt darin, dass eine Aufwecksequenz für eine sich in einem Stromsparmodus befindende Kommunikationseinheit nur so lange gesendet werden muss, bis diese Kommunikationseinheit einen Aufweckimpuls als solchen erkannt und daraufhin einen Antwortimpuls ausgesendet hat. Dadurch lässt sich die Übertragung besonders schnell initiieren, auch wenn sich eine Kommunikationseinheit zur Stromersparnis in einem Stromsparmodus befindet.

Derartige Kommunikationseinheiten in einem Stromsparmodus werden in der Regel mit einer vorgegebenen Taktfrequenz in eine Empfangsbereitschaft versetzt, um festzustellen, ob eine Kommunikation durchgeführt werden soll. Die Aufwachfrequenz ist dabei von dem jeweiligen Gerätetyp der Kommunikationseinheit abhängig. Daher muss die Aufweckimpulsfolge gemäß dem Stand der Technik so lange dauern, dass auch die Kommunikationseinheit mit der niedrigsten Aufweckfrequenz die Aufweckimpulsfolge mit Sicherheit detektieren kann. Diese maximale Dauer der Aufweckimpulsfolge muss in jedem Fall abgewartet werden, bevor beispielsweise eine nachfolgende Kommunikation eingeleitet wird, auch wenn die zweite Kommunikationseinheit den Aufweckimpuls wesentlich früher wahrgenommen hat. Durch die vorgeschlagene frühe Rückmeldung mit einem Antwortimpuls können die Dauer bis zu der sich anschließenden tatsächlichen Kommunikation daher im Mittel wesentlich verkürzt und der Stromverbrauch sowohl im Endgerät als auch im Servicegerät reduziert werden. Somit wird durch das erfindungsgemäße Verfahren eine stromsparende optische Kommunikationsinitiierung implementiert, die unabhängig von der Aufwachfrequenz des Endgerätes ist, keine Mindestaufwachfrequenz für Endgeräte vorschreibt und Aufwecksequenzen konstanter maximaler Länge für alle Endgeräte vermeidet.

Da die erfindungsgemäße Lösung im Vergleich zu einer IrDA-Schnittstelle für die Kommunikation nur minimale Anforderungen an die Leistungsfähigkeit und die Hardware-Resourcen der die Aufweckfrequenz der ersten Kommunikationseinheit empfangenden zweiten Kommunikationseinheit (Endgerät) stellt, lässt sich dieses Verfahren auch besonders gut für Fälle nutzen, in denen eine kostengünstige Implementierung notwendig ist, bspw. bei der Verbrauchserfassung. Eine möglicherweise in der ersten Kommunikationseinheit (Service-Gerät, wie bspw. PDA, Notebook oder ein sonstiges zur optischen Kommunikation eingerichtetes Gerät) vorgesehene IrDA-Schnittstelle kann jedoch genutzt werden, da die für den IrDA-Standard verwendeten Bauteile durch eine entsprechende (einfachere) elektronische Steuerung für das erfindungsgemäße Verfahren angesprochen werden können. Vorzugsweise werden durch das erfindungsgemäße Verfahren die binären Daten mit zwei Signalzuständen übertragen, wobei ein erster Signalzustand durch einen Leuchtimpuls innerhalb eines Schritttaktes kodiert ist und ein zweiter Signalzustand durch keinen Leuchtimpuls innerhalb eines Schritttaktes kodiert ist. Durch die Zuordnung eines Schritttaktes zu einem Signalzustand kann über das Vorhandensein bzw. Fehlen eines Leuchtimpulses in diesem Schritttakt also eine binäre Dateninformation kodiert werden. Diese innerhalb eines Schritttaktes ausgesendete Information (Leuchten bzw. kein Leuchten) wird nachfolgend auch als Impuls bezeichnet.

Gemäß einer vorteilhaften Ausgestaltung des Verfahrens weist die optische Aufweckimpulsfolge regelmäßig leuchtfreie Signalzustände auf und wird von der ersten Kommunikationseinheit bspw. kontinuierlich ausgesendet. Die zweite Kommunikationseinheit sendet eine Antwortimpulsfolge dann in diesen leuchtfreien Signalzuständen der Aufweckimpulsfolge. Eine Impulsfolge ist definiert als eine Folge mehrerer Einzelimpulse in aufeinanderfolgenden Schritttakten, wobei die Impulsfolge eine beliebige Länge aufweisen kann. Die Aufweckimpulsfolge ist also aus einer Folge von Leuchtimpulsen und fehlenden Leuchtimpulsen aufgebaut, die in dem vorgegebenen Schritttakt aufeinander folgen. Durch definiertes Abwechseln von Signalzuständen mit und ohne Leuchtimpulsen kann eine Kodierung der Aufweckimpulsfolge erreicht werden, so dass die zweite empfangende Kommunikationseinheit die Aufweckimpulsfolge identifizieren kann. In dieser Kodierung der Aufweckimpulsfolge sind in regelmäßigen Abständen leuchtfreie Signalzustände vorgesehen, während denen der optische Datenübertragungskanal zwischen den beiden Kommunikationseinheiten dunkel ist. Wenn nun die zweite Kommunikationseinheit in einem solchen dunklen Signalzustand (leuchtfreie Signalzustände der Aufweckimpulsfolge) Antwortimpulse (Leuchtimpulse) aussendet, kann die erste Kommunikationseinheit das Aufwachen der zweiten Kommunikationseinheit zuverlässig erkennen, da sie als Initiator der Kommunikation während des Sendens der Aufweckimpulsfolge auch optische Antwortsignale empfangen kann.

Der Empfang während des Sendens der Aufweckimpulsfolge lässt sich erfindungsgemäß bspw. dadurch erreichen, dass die erste Kommunikationseinheit während des optischen Sendens gleichzeitig Leuchtimpulse empfangen kann und bei Empfang von anderen als ihren eigenen Leuchtimpulsen das Aussenden der Aufweckimpulse abbricht. In diesem Fall ist die optische Kommunikationsschnittstelle der ersten Kommunikationseinheit für Betrieb ohne Echounterdrückung ausgebildet, d.h. die Schnittstelle empfängt auch die von ihr selbst bspw. als Aufweckimpulse ausgesandten Leuchtimpulse. Während der leuchtfreien Signalzustände werden dann automatisch Leuchtimpulse der anderen Kommunikationseinheit empfangen. Die Unterscheidung zwischen als Echo auf die selbst ausgesandten Leuchtimpulse empfangenen Impulse und fremden, von einer anderen Kommunikationseinheit ausgesendeten Impulsen kann mittels des in der Ansteuerelektronik hinterlegten Schemas der Aufweckimpulsfolge erfolgen.

Da es ausreichend ist, wenn der Sender bzw. die Kommunikationsschnittstelle der ersten Kommunikationseinheit nur in den leuchtimpulsfreien Schritttakten optischer Ausgangssignale bzw. -impulsfolgen für optische Eingangssignale empfangsbereit ist, kann die erste Kommunikationseinheit bspw. auch nur während der leuchtfreien Signalzustände der Aufweckimpulsfolge für Leuchtimpulse empfangsbereit sein und bei Empfang von Leuchtimpulsen das Aussenden der Aufweckimpulsfolge abbrechen. Diese Verfahrensvariante entspricht einer optischen Kommunikation mit Echounterdrückung, d.h. zeitgleich mit dem optischen Senden wird kein optisches Signal empfangen. Ob die optische Übertragung mit oder ohne Echounterdrückung stattfindet, hängt von den jeweils verwendeten elektronischen Bauteilen ab. Ein besonderer Vorteil des erfindungsgemäßen Verfahrens liegt darin, dass es universell in beiden Betriebsarten ausgeführt werden kann, wobei die Ausführung mit Echounterdrückung in der Signalverarbeitung einfacher ist.

Wenn die in der Schnittstelle verwendeten elektronischen Bauteile während des Aussendens einer Impulsfolge aus mehreren aufeinanderfolgenden Schritttakten mit und ohne Leuchtimpulsen einen gleichzeitigen Empfang nicht zulassen, können leuchtfreie Signalzustände innerhalb der Aufweckimpulsfolge, während denen die erste Kommunikationseinheit empfangsbereit ist, dadurch erzeugt werden, dass die Aufweckimpulsfolge aus mehreren Teilimpulsfolgen und sich jeweils anschließenden sendefreien Pausen aufgebaut ist, wobei in den sendefreien Pausen von optischem Senden auf optisches Empfangen umgeschaltet wird, so dass die erste Kommunikationseinheit Leuchtimpulse empfangen kann und bei Empfang von Leuchtimpulsen das Aussenden der Aufweckimpulsfolge abbricht. Die Empfangsbereitschaft wird während der leuchtfreien Signalzustände elektronisch also dadurch erreicht werden, dass durch die Steuerung der optischen Schnittstelle das Senden der Teilimpulsfolge für einen gewissen Zeitraum deaktiviert und das Empfangen aktiviert wird.

Dies entspricht einer Aufteilung der Aufweckimpulsfolge in Teilfolgen, wobei die erste Kommunikationseinheit eine Teilfolge aussendet, danach den Sender deaktiviert und für eine bestimmte Zeit den Empfänger aktiviert. Kam während der Empfangsphase keine Reaktion von einem Endgerät, dann schaltet das Servicegerät wiederum auf optisches Senden und emittiert eine weitere Teilfolge der Aufwecksequenz. Diese Prozedur wird solange wiederholt, bis eine "gültige" Reaktion eines Endgeräts empfangen wurde, das sich in Reichweite befindet. Die Teilfolgen können beispielsweise Einzelzeichen aus 10 aufeinander folgenden Schritttakten mit mindestens zwei Leuchtbits sein, und die Pause zwischen den Teilfolgen sollte vorzugsweise kurz sein und sich in der Größenordnung von 1 bis 2 Zeichenlängen bewegen. Dies garantiert, dass ein empfangendes Endgerät in der Wake-Up-Routine seinen optischen Empfänger nie länger als für die Dauer von ca. 2 Zeichen anschalten muss, um während einer Aufwecksequenz eine erste optische Reaktion zu detektieren. Hat das Endgerät eine gültige Teilfolge einer Aufwecksequenz detektiert, dann antwortet es in der Pause zwischen den Aufwecksequenzteilfolgen und veranlasst damit das Servicegerät, das Senden weiterer Teilfolgen zu beenden.

In jeder der vorbeschriebenen Betriebsarten kann es sein, dass die Empfänger der optischen Kommunikationsschnittstellen eine Empfängerlatenzzeit aufweisen, während der sie nach dem Senden eines Leuchtimpulses noch nicht die volle Empfindlichkeit für den Empfang optischer Impulse aufweisen. Um dies zu berücksichtigen, kann erfindungsgemäß zwischen dem letzten Leuchtimpuls der Aufweckimpulsfolge vor einer Folge leuchtfreier Signalzustände und dem ersten Leuchtimpuls der Antwortimpulsfolge eine vorgebbare Anzahl leuchtfreier Signalzustände in der Aufweckimpulsfolge abgewartet werden. Die Anzahl der Signalzustände entspricht dann der gewünschten Empfängerlatenzzeit. Alternativ dazu ist es natürlich auch möglich, das Aussenden der Antwortimpulse timergesteuert entsprechend der gewünschten Latenzzeit zu verzögern.

Um einen gleichmäßigen Verfahrensablauf zu erreichen, ist es vorteilhaft, wenn die Aufweckimpulsfolge von der ersten Kommunikationseinheit kontinuierlich ausgesendet wird.

Die von der ersten Kommunikationseinheit gesendete Aufweckimpulsfolge kann erfindungsgemäß aus einer Folge von Aufweckzeichen bestehen, wobei ein Aufweckzeichen eine unterbrechungsfrei im Schritttakt gesendete Folge von mehreren binären Signalzuständen ist und wobei jedes Aufweckzeichen mindestens einen Schritttakt mit einem leuchtfreien Signalzustand aufweist. Ein Aufweckzeichen ist daher eine Aufweckimpulsfolge definierter Länge, also eine unterbrechungsfrei im Schritttakt gesendete Folge von mehreren binären Signalzuständen definierter Anzahl. Durch die Definition solcher Aufweckzeichen in einer Aufweckimpulsfolge lässt sich einfach ein wiederholender Aufbau der Aufweckimpulsfolge erreichen, dessen Charakteristika einfach von der zweiten Kommunikationseinheit erkannt werden können. Auch Teilfolgen der Aufweckimpulsfolgen können aus einem oder mehreren aufeinanderfolgenden Aufweckzeichen bestehen.

Eine Kodierung der Aufweckzeichen erfolgt vorzugsweise derart, dass die Aufweckimpulsfolge von der zweiten Kommunikationseinheit in einzelne Aufweckzeichen zerlegt werden kann. Dies kann einfacher Weise dadurch erreicht werden, dass jedes Aufweckzeichen mindestens zwei Leuchtimpulse bekannten Abstands aufweist. Dann können bei einer Aufteilung der Aufweckimpulsfolge in Teilfolgen zwischen den Aufweckzeichen der Aufweckimpulsfolge auch Sendelücken unbestimmter Länge auftreten, wobei es immer noch möglich ist, die Aufweckzeichen einfach zu identifizieren.

Vorteilhafter Weise wird die aus Aufweckzeichen bestehende Aufweckimpulsfolge kontinuierlich und unterbrechungsfrei von der ersten Kommunikationseinheit gesendet, wobei die Aufweckzeichen der Aufweckimpulsfolge mindestens einen Leuchtimpuls enthalten, der einen vorbekannten Abstand zu mindestens einem anderen Leuchtimpuls des vorangegangenen Aufweckzeichens aufweist. So ist es für die zweite Kommunikationseinheit einfach möglich, das kontinuierliche Aufeinanderfolgen von Aufweckzeichen in einer Aufweckimpulsfolge zu überprüfen.

Gemäß einer bevorzugten Variante des erfindungsgemäßen Verfahrens kann das Aufweckzeichen in seinem vorletzten Schritttakt leuchtfrei sein und die zweite Kommunikationseinheit einen Antwortimpuls in diesem leuchtfreien Schritttakt senden. Der letzte Schrittakt eines Zeichens ist häufig als Stopbit definiert, das leuchtfrei bleibt und von vielen Kommunikationsschnittstellen zur Synchronisation verwendet wird. Mit der vorbeschriebenen Lösung kann das Stopbit zuverlässig leuchtfrei gehalten werden, so dass die normale Schnittstellenkommunikation und -signalverarbeitung nicht gestört wird.

Wenn ein Aufweckzeichen je zur Hälfte aus Schritttakten mit Leuchtimpulsen und ohne Leuchtimpulse besteht, kann in für das Endgerät besonders energiesparender Weise ein Aufwecken durchgeführt werden. Angenommen, ein Aufweckzeichen besteht aus 10 Schritttakten, von denen die ersten fünf Leuchtimpulse enthalten und die zweiten fünf leuchtimpulsfrei sind. Dann muss der Empfänger der Endgerätes nur zweimal für je einen Schrittakt im Abstand von 4 dazwischenliegenden Schritttakten angeschaltet werden, um ein Aufweckzeichen sicher zu erkennen. Da bei jedem Anschalten des Empfängers Energie verbraucht wird, ist dieser Aufbau der Aufweckzeichen besonders energiesparend.

Um ein fehlerhaftes Abbrechen der Aufweckimpulsfolge bspw. durch optische Störsignale zu vermeiden, ist gemäß einer besonders bevorzugten Erfindungsvariante vorgesehen, dass die ersten Kommunikationseinheit vor dem Abbrechen der Aufweckimpulsfolge überprüft, ob die empfangenen Leuchtimpulse Antwortimpulse sind. Dies kann bspw. durch eine besondere Kodierung der Antwortimpulsfolge erreicht werden, wobei bspw. zwei Leuchtimpulse in aufeinanderfolgenden Schritttakten ausgesendet werden. Es sind jedoch auch beliebige andere Kodierungen der Antwortimpulse denkbar.

Ferner kann erfindungsgemäß vorgesehen sein, dass nach Abbruch der Aufweckimpulsfolge eine Kommunikation zwischen der ersten und zweiten Kommunikationseinheit zur Übertragung binärer Daten bspw. in einer vorgegebenen Kodierung stattfindet.

Dazu ist es besonders vorteilhaft, wenn die auf die Aufweckimpulsfolge der ersten Kommunikationseinheit reagierende zweite Kommunikationseinheit nach Abbruch der Aufweckimpulsfolge eine optisch kodierte Botschaft an die erste Kommunikationseinheit sendet, wobei die Botschaft Kommunikationsparameter für die volle Kommunikation enthält und die nachfolgende Kommunikation dann mit den übertragenen Kommunikationsparametern erfolgt. Dadurch ist es möglich, eine Aufweckkommunikation mit Kommunikationsparametern zu realisieren, die möglichst geräteunabhängig ist und auch von leistungsschwachen Endgeräten erkannt werden kann. Nach dem Erkennen eines Aufwecksignals können die Endgeräte dann die von ihnen maximal leistbaren Kommunikationsparameter an die die Kommunikation initiierende Kommunikationseinheit senden, so dass die eigentliche Datenübertragung mit der den beiden Kommunikationseinheiten zugeordneten maximalen Kommunikationsgeschwindigkeit durchgeführt werden kann. Dadurch wird die Datenübertragung nach der Kommunikationsinitiierung optimal an die Leistungsfähigkeit des im Endgerät vorhandenen Mikrocontrollers angepasst, was auch zur Energieeinsparung beiträgt.

Um nach Abbruch einer Kommunikationsverbindung das Aufweckverfahren neu zu initiieren, kann erfindungsgemäß vorgesehen werden, dass die Botschaft mit den Übertragungsparametern einen Timeout-Wert enthält, der die maximal zulässig Kommunikationspause spezifiziert. Nach deren Überschreitung wird dann eine erneute Kommunikationsinitialisierung gemäß dem vorgeschriebenen Aufweckverfahren erforderlich. Alternativ oder zusätzlich kann auch ein Timeout-Wert in der ersten Kommunikationseinrichtung fest vorgegeben sein. Um bspw. nach einer erfolgreichen ersten Kommunikation oder einem ungewollten Kommunikationsabbruch einen möglicherweise notwendigen nochmaligen Kommunikationsaufbau zu beschleunigen, kann ferner die Aufwachfrequenz der zweiten Kommunikationseinrichtung nach einer ersten Kommunikation oder einem ersten Kommunikationsaufbau für eine vorgebbare Zeitdauer erhöht werden oder die zweite Kommunikationseinheit für eine vorgebbare Zeitdauer empfangsbreit bleiben.

Weiterbildungen, Vorteile und Anwendungsmöglichkeiten der vorliegenden Erfindung ergeben sich auch aus der nachfolgenden Beschreibung von Verfahrensbeispielen und der Zeichnung. Dabei gehören alle beschriebenen und/oder bildlich dargestellten Merkmale für sich oder in beliebiger Kombination zum Gegenstand der Erfindung, unabhängig von ihrer Zusammenfassung in den Ansprüchen oder deren Rückbeziehung.

Es zeigen:
- Fig. 1: schematisch den Aufbau eines Datenzeichens in einer optischen Modulation;
- Fig. 2: schematisch den Ablauf des erfindungsgemäßen Aufweckverfahrens gemäß einer ersten Ausführungsform;
- Fig. 3a bis 3d: schematisch den Ablauf des erfindungsgemäßen Aufweckverfahrens gemäß einer zweiten Ausführungsform und
- Fig.4: schematisch den Zusammenhang zwischen den optischen Impulsen und der dazugehörigen Kodierung.

Das erfindungsgemäße Verfahren zur optischen Übertragung von Daten wird nachfolgend für batteriebetriebene Endgeräte mit optischen Schnittstellen am Beispiel von elektronischen Verbrauchserfassungsgeräten beschrieben. Die Mehrheit heute üblicher Verbrauchserfassungsgeräte besitzen eine Langzeitbatterie, die den Betrieb über die gesamte Lebensdauer des Geräts ermöglicht. Dies Konzept erlaubt es, die Batterie fest in die Geräte zu integrieren und so die Manipulationssicherheit zu erhöhen. Erfassungsgeräte, die eichrechtlich relevante Daten produzieren, können schwerlich mit Wechselbatterien ausgestattet werden, da die Entnahme der Batterien zu unzulässigen Funktionsunterbrechungen und -störungen führen würde. Daher sind elektronische Heizkostenverteiler inzwischen so batterieschonend konzipiert, dass mit einer einzigen Lithiumzelle Lebensdauern von 10 bis 15 Jahren erreicht werden. Der mittlere Strombedarf solcher Geräte liegt typischerweise im Bereich weniger Mikroampere.

Zur Stromeinsparung verfügen solchen Geräte über spezielle Mikrocontroller für Low-Power-Applikationen mit sog. Sleep-, Low-Power- oder Power-Down-Modi. In solch einem Modus entnimmt Mikrocontroller nur minimale Ladungsmengen aus der Batterie. Um seine bestimmungsgemäßen Aufgaben erfüllen zu können, wacht der Mikrocontroller durch einen Wake-Up-Timer gesteuert in regelmäßigen Abständen aus dem Stromsparmodus auf, aktualisiert in einer Wake-Up-Routine seine Zeitzählung und prüft, ob anstehende Aktionen abzuarbeiten sind. Ggf. anstehende Aufgaben werden von dem Mikrocontroller abgearbeitet; danach fällt das Gerät wieder in den Stromsparmodus zurück. Die Aufwachfrequenz des Wake-Up-Timers ist dabei verglichen mit der Taktfrequenz zur Befehlsabarbeitung relativ niedrig und liegt in der Regel in einer Größenordnung von 1 Hz bis 16 Hz.

Das erfindungsgemäße optische Kommunikationsverfahren kann unabhängig von der jeweiligen Aufwachfrequenz des Wake-Up-Timers in die Wake-Up-Routine eingebettet werden. Die Reaktionsgeschwindigkeit des Endgeräts auf optische Signale eines die Kommunikation initiierenden Gerätes korrespondiert dabei mit der Aufwachfrequenz des Wake-Up-Timers, weil die optisches Signale nur in einem wachen Zustand des Mikrocontrollers empfangen und erkannt werden. Der zusätzliche Strombedarf für die Erkennung optischer Signale zur Initiierung der Kommunikation ist minimal. Das Verfahren zum Aufbau der optischen Kommunikationsverbindung läuft wie folgt ab:

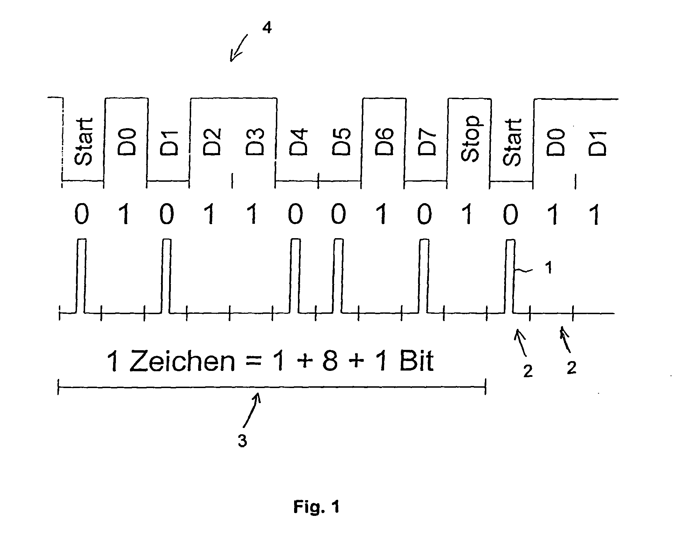

Eine durch ein Servicegerät gebildete erste Kommunikationseinheit sendet als Initiator der Kommunikation kontinuierlich mit einer zuvor vereinbarten und festen Schrittgeschwindigkeit optische Aufwecksignale. Dabei kann es sich insbesondere um RZI-modulierte optische Impulse handeln, wie sie in Fig. 1 dargestellt sind. Bei der optischen RZI-Modulation (Return-to-Zero-Inverted) bewirken Null-Bits das Senden eines Leuchtimpulses 1 innerhalb eines Schritttaktes 2. Eins-Bits bewirken keinen Leuchtimpuls und erzeugen also leuchtimpulsfreie Schritttakte 2. Die Länge eines Schritttakts 2 entspricht der Dauer eines Datenbits (Bitzeit). Die Dauer eines Leuchtimpulses 1 ist dagegen wesentlich kürzer und beträgt bspw. 3/16 einer Bitzeit.

Zehn aufeinanderfolgende Schrittakte 2 bilden ein Zeichen 3, das einer festen Kodierung 4 entspricht. Das Zeichen 3 wird aus einem Start-Bit, nachfolgenden Datenbits D0 bis D7 und einem das Zeichen 3 abschließenden Stop-Bit gebildet. Der dem Start-Bit zugeordnete Schrittakt 2 enthält zweckmäßigerweise einen Leuchtimpuls 1, um den Zeichenanfang zu markieren. Entsprechend wird das Stop-Bit nach einer definierten Anzahl von Schritttakten 2 erreicht und enthält zur Markierung des Zeichenendes keinen Leuchtimpuls 1. Einzelne optische Signale zeichnen sich also dadurch aus, dass einem von zwei logischen Signalzuständen ein Leuchtimpuls 1 innerhalb eines Schritttaktes 2 zugeordnet ist und der dazu invertierte Signalzustand leuchtimpulsfrei bleibt. Diese Art der Bitkodierung wird u.a. bei dem IrDA-Standard im SIR-Modus verwendet. Das erfindungsgemäße Verfahren kann allerdings ohne Einschränkung auch mit einer invertierten binären Logik erfolgen, d.h. Null-Bits sind leuchtfrei und Eins-Bits enthalten einen Leuchtimpuls. Auch kann eine andere Kodierung 4 verwendet werden.

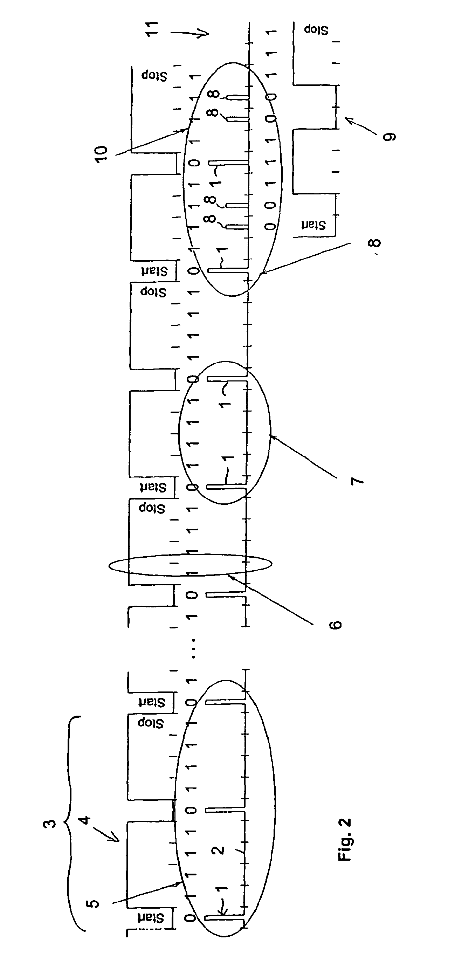

Gemäß der in Fig. 2 dargestellten Ausführungsvariante bilden die Aufwecksignale des Servicegerätes eine Aufweckimpulsfolge 5 aus Leuchtimpulsen 1, die im Abstand von fünf Schritttakten 2 wiederholt werden. Zehn aufeinanderfolgende Schritttakte 2, beginnend mit einem Leuchtimpuls 1, bilden ein Aufweckzeichen 3. Eine Folge unmittelbar aufeinander folgender Aufweckzeichen 3 bilden die Aufweckimpulsfolge 5, die von dem Servicegerät kontinuierlich ausgesendet wird.

Die Wake-Up-Routine in dem Endgerät, die durch den Wake-Up-Timer in festen Zeitabständen aufgerufen wird, schaltet für eine kurze definierte Zeitspanne einen optischen Empfänger ein. Ist innerhalb der Einschaltzeit des Empfängers nach dem Aufweckzeitpunkt 6 aus dem Stromsparmodus mindestens ein optischer RZI-modulierter Impuls 1 empfangen worden, dann bleibt Empfänger für den Empfang weiterer optischer Impulse 1 eingeschaltet. Der Mikrocontroller misst nun die zeitlichen Abstände zwischen den empfangenen optischen Impulsen 1 in einer Zeitmessung 7. Stellt er "ungültige", d.h. nicht der festgelegten Aufweckimpulsfolge 5 entsprechende Impulsabstände fest, dann ist von einer Störung auszugehen (z. B. von einer IR-Fernbedienung). In diesem Fall fällt der Mikrocontroller unmittelbar in seinen Stromsparmodus zurück und verbleibt dort bis zum nächsten Wake-Up-Ereignis.

Hat das Endgerät dagegen eine "gültige" Sequenz von Aufweckimpulsen 1, d.h. die Aufweckimpulsfolge 5, identifiziert, beginnt es seinerseits in den leuchtimpulsfreien Schrittakten der Aufweckimpulsfolge 5 eigene Leuchtimpulse 8 als Antwortimpulsfolge 10 in der Kodierung 9 zu senden, und zwar solange, bis das Servicegerät als Initiator der Kommunikation das Senden der Aufwecksequenz bzw. -impulsfolge 5 abbricht. Die Antwortimpulsfolge 10 ist dabei so aufgebaut, dass jeweils drei leuchtfreien Schritttakten 2 zwei Leuchtimpulse 8 folgen, wobei zwei solcher Sequenzen wieder ein Zeichen bilden. In dem mittleren der drei leuchtfreien Schritttakte 2 der Antwortimpulsfolge 10 liegt dann jeweils der Aufweckimpuls 1 der Aufweckimpulsfolge 5.

Die Anwendung des Verfahrens setzt voraus, dass der Initiator der Kommunikation, d.h. die erste Kommunikationseinheit während des Sendens der Aufweckimpulsfolge 5 auch optische Signale bzw. Impulse 8 empfangen kann. Es reicht bereits aus, wenn der Initiator (Sender) nur in den leuchtimpulsfreien Schritttakten 2 optischer Ausgangssignale 1 für optische Eingangssignale 8 empfangsbereit ist.

Die Hardware für die IrDA-Kommunikation besteht typischerweise aus mehreren, voneinander trennbaren Stufen:

Die erste Stufe besteht aus einem Parallel-/Seriellwandler. Dieser wandelt ein Zeichen (5 bis 8 Bit) in einen seriellen Datenstrom mit vorgegebenem Schrittakt und fügt Start- und Stopbits sowie ggf. ein Paritätsbit hinzu. Ein solcher Parallel-Seriellwandler wird auch als UART (Universal Asynchronous Receiver Transmitter) bezeichnet.

Die zweite Stufe bildet ein Impulsformer, der aus zu sendenden binären Signalzuständen innerhalb eines Schrittaktes einen Leuchtimpuls von bspw. 1,6µs bis 3/16-Bitzeiten Breite erzeugt bzw. nicht erzeugt. Bei der IrDA-Kommunikation wird jedes 0-Bit in einen IR-Leuchtimpuls transformiert und jedes 1-Bit bleibt leuchtfrei. Beim Empfang verlängert der Impulsformer jeden Leuchtimpuls auf die volle Bitdauer entsprechend dem vorgegeben Schrittakt. Bei IrDA werden empfangene Leuchtimpulse zu 0-Bits und fehlende Impulse zu 1-Bits ( = Ruhezustand) verlängert.

Die dritte Stufe ist ein sog. IrDA-Transceiver-Baustein. Dieser setzt die elektrischen Signale in optische Signale um und umgekehrt. Die IrDA-Transceiver sind in der Regel während und kurz nach dem optischen Senden eines IR-Impulses "blind" für den Empfang von IR-Signalen. Die volle Empfangsempfindlichkeit ist erst nach Ablauf einer sog. Latenzzeit wieder hergestellt. Einige wenige IrDA-Transceiver unterstützen einen Echobetrieb, indem sie die Signale der Sendestufe an die Empfängerstufe weiterleiten.

Die UARTs sind in der Regel während des Sendens von Zeichen auch empfangsbereit. Das gleiche gilt für separate IrDA-Impulsformer-Bausteine. Die IrDA-Transceiver weisen mehrheitlich eine Echounterdrückung auf, d. h. sie empfangen einen von Ihnen ausgesendeten Leuchtimpuls nicht selbst. Dazu wird der Empfänger zwecks Echounterdrückung abgeschaltet. Nach Wiederanschalten benötigt der optische Empfangssensor noch einige Zeit (je nach Typ 1 bis 5 Bitzeiten bei 9600 Bit/s), um sich zu erholen und volle Empfangsempfindlichkeit zu erlangen.

Das erfindungsgemäße Verfahren nutzt diese gemäß IrDA-Standard nicht verwendeten Eigenschaften der IrDA-Hardware-Komponenten im Servicegerät (Notebook, PDA, Palmtop) aus, um die vom Endgerät emittierten Leuchtimpulse 8 zwischen den Leuchtimpulsen 1 der ausgesendeten Aufwecksequenz bzw. - impulsfolge 5 zu erkennen. Wenn ein Gerät dagegen während des Sendens eines Zeichens bzw. einer Pulsfolge nicht empfangen kann, wird die Aufweckimpulsfolge 5 in zu sendende Teilfolgen mit sich jeweils anschließenden Empfangspausen zerlegt.

Ein Aufweckimpulse 1 sendendes Servicegerät empfängt im Betrieb ohne Echounterdrückung also die eigene Aufweckimpulsfolge 5. Wenn es auch in den leuchtimpulsfreien Schritttakten 2 der gesendeten Aufweckimpulsfolge 5 "fremde", d.h. nicht selbst ausgesandte Leuchtimpulse 8 empfängt, wertet das Servicegerät dies als Reaktion auf die Aufweckimpulse 1 bzw. deren Sequenz in der Aufweckimpulsfolge 5. Entsprechendes gilt für den Betrieb mit Echounterdrückung, bei dem das Servicegerät ohnehin nur in den leuchtimpulsfreien Schritttakten 2 empfangen kann.

Eine Unterscheidung zwischen optischen Störimpulsen in der Aufweckimpulsfolge 5 und einer gewollten Antwortreaktion wird erreicht, indem das antwortende Endgerät eine spezifische Impulsfolge als Antwortimpulsfolge 10 in die leuchtimpulsfreien Schritttakte 2 der Aufweckimpulsfolge 5 einstreut. Diese ist von dem Sender der Aufweckimpulsfolge 5, d.h. dem Servicegerät als erster Kommunikationseinheit, als "zulässige Verfälschung" identifizierbar ist. Unmittelbar nach dem Erkennen einer "gültigen" Reaktion des als zweiter Kommunikationseinheit wirkenden Endgeräts auf die Aufweckimpulse 1 beendet das Servicegerät das Senden der Aufweckimpulsfolge 5 zu dem Abbruchzeitpunkt 11.

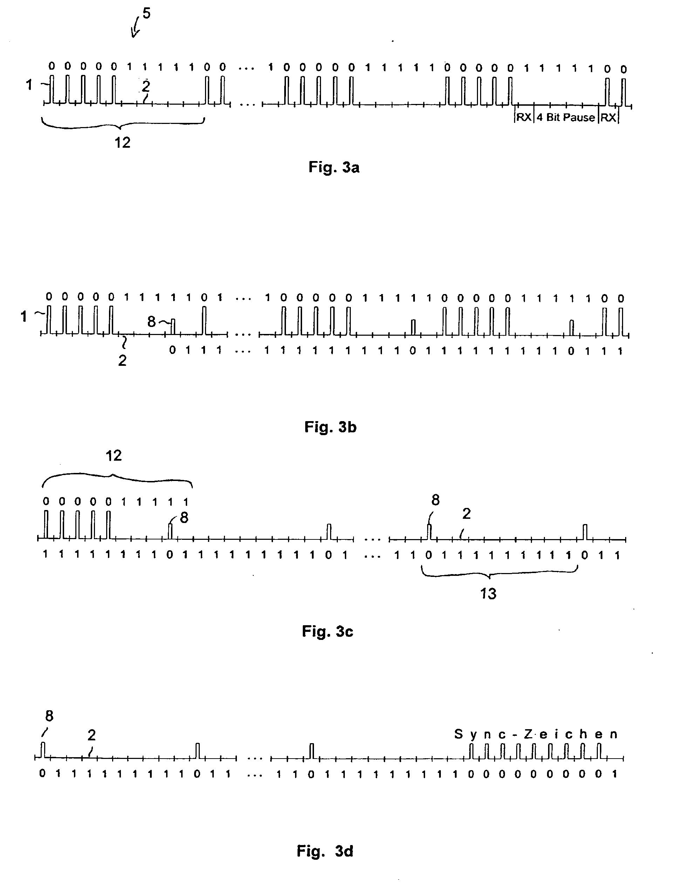

Nachfolgend wird anhand von Fig. 3 eine erfindungsgemäße Realisierung für einen Aufweckmechanismus vorgestellt, die sich im Rahmen des IrDA-Standards als besonders vorteilhaft und energiesparend erwiesen hat. Ausgehend von einer IrDA-Default-Baudrate von 9600 Bit/s beträgt eine Bitzeit ca. 104 µs. Ein Zeichen besteht insgesamt aus zehn Bits.

Die Aufwecksequenz 5 besteht aus IrDA-kodierten Aufweckzeichen 12 mit fünf aufeinanderfolgenden Leuchtimpulsen 1 und fünf sich anschließenden leuchtfreien Schritttakten 2 und wird in der hexadezimalen Kodierung als F0h bezeichnet. Das Zeichen enthält also fünf IR-Impulse bekannten Abstands (104,2µs @ 9600 Bit/s), so dass auch wenn unbeabsichtigt Lücken im Datenstrom entstehen, eine sichere Detektion einer "gültigen" Aufwecksequenz durch Ausmessen der Impulsabstände möglich ist.

Die Antwortzeichen 13 sind IrDA-kodierte Zeichen mit einem Leuchtimpuls 8 (Startbit) und neuen leuchtfreien Bits (FFh-Zeichen). Das Antwortzeichen 13 wird um acht Bit verzögert bezogen auf den Anfang des Aufweckzeichens 12 gesendet. Das Startbit des Antwortzeichens wird demnach im MSB (Datenbit D7) des Aufweckzeichens gesendet. Damit ist eine max. Empfängerlatenzzeit von ca. 397µs (3 + ¹³/₁₆ Bit) zulässig. Bei einer Empfängerlatenzzeit von ca. 400µs ist die Auswahl einsetzbarer IrDA-Transceiver nicht nennenswert beschränkt. Auch die letzten beiden Datenbits D2 und D3 des nächsten IrDA-Aufweckzeichens 12 folgen frühestens 4 + ¹³/₁₆ Bit (501,3µs) nach dem Ende des IrDA-Antwortimpulses 1 vom Endgerät. Nutzt das Endgerät ebenfalls einen IrDA-Transceiver, was nicht vorausgesetzt wird, dann hat dessen Empfänger bei den Datenbits D2 und D3 des nächsten Aufweckzeichens 12 wieder max. Empfindlichkeit. Beide Kommunikationspartner können also IR-Signale des jeweils anderen Kommunikationspartners empfangen, während sie selbst senden. Damit ist es sowohl dem Servicegerät als Initiator der Kommunikation möglich, während des Sendens der Aufwecksequenz 5 die Reaktion eines Endgeräts festzustellen, als es auch dem Endgerät während des Sendens der Antwortzeichen 13 möglich ist, eine Reaktion des Aufweckzeichensenders zu erkennen.

Ein solches Aufweckzeichen 12 erlaubt ein besonders stromsparendes Erkennen der Aufwecksequenz bzw. -impulsfolge 5, da ein Endgerät nur zweimal im Abstand von vier Bitzeiten den IR-Empfänger für eine Bitzeit einschalten muss, um sicher ein Aufweckzeichen 12 wahrzunehmen. Die Aufweckkommunikation läuft dann wie folgt ab:

Der Initiator der Kommunikation sendet kontinuierlich oder mit Unterbrechungen eine Folge von Aufweckzeichen 12 (Fig. 3a).

Das Endgerät wacht auf, regelt ggf. das Umgebungslicht weg und schaltet seinen Empfänger für mindestens eine Bitzeit von bspw. 125µs ein. Sieht es keinen Leuchtimpuls 1, dann schaltet es seinen Empfänger vier Bitzeiten später noch einmal für eine Bitzeit ein. Sieht es wieder keinen Leuchtimpuls 1, dann legt es sich schlafen. Detektiert es bei einem der beiden Empfangsversuche einen IR-Leuchtimpuls 1, synchronisiert es sich auf die Aufweckzeichen 12. Bei einem F0h-Aufweckzeichen 12 sendet das Endgerät in den MSBs (Datenbit D7) der Aufweckzeichen 12 jeweils einen Leuchtimpuls 8, also eine Folge aus FFh-Zeichen mit 9600 Bit/s. Dies geschieht auf Bitebene kollisionsfrei (Fig. 3b).

Der Initiator der Kommunikation empfängt die Antwortimpulsfolge 10 auf die Aufweckenzeichen 12 und stellt das Senden der Aufwecksequenz 5 ein. Das Endgerät erkennt das Ausbleiben der Aufweckimpulse 1. Es sendet nachfolgend solange weiter Antwortzeichen 13, bis eine maximale in der Aufwecksequenz 5 zulässige Sendepause überschritten ist, bspw. mindestens 10ms lang, was der max. Empfängerlatenzzeit des Servicegeräts entspricht (Fig. 3c). Danach sendet das Endgerät ein Sync-Zeichen mit angehängtem Protokollrahmen, der die Kommunikationsparameter des Endgeräts enthält, bzw. bei "einfachen Endgeräten" eine Standardantwort (Fig. 3d).

Diese Abfolge gilt sowohl für einen Betrieb der Schnittstelle mit als auch ohne Echounterdrückung. Weil der Antwortimpuls 8 im letzten Datenbit D7 und nicht im Stopbit des Aufweckzeichens 12 liegt, kann das Stopbit in jedem Fall leuchtimpulsfrei gehalten werden. Dies ist insbesondere im Betrieb ohne Echounterdrückung wichtig, weil dadurch mindestens ein leuchtfreies Signal innerhalb einer Zeichenlänge sichergestellt wird, was für die Signalverarbeitung von besonderer Bedeutung ist. Ein Unterschied im Betrieb mit und ohne Echounterdrückung ergibt sich allein aus der geräteinternen Verarbeitung des (kombinierten) Aufweck- und Antwortdatenstroms. Verbindet man IrDA-Transceiver-Bausteine ohne integrierte Echounterdrückung beispielsweise direkt mit den Ein- und Ausgängen eines Mikrocontrollers, dann muss sowohl eine Echounterdrückung als auch eine Zeichensynchronisation softwaremäßig implementiert werden. Beides gelingt dadurch, dass zum einen die Impulsfolge 5 der Aufweckzeichen 12 bekannt ist und zum anderen, weil die Kombination von Aufweckzeichen 12 und Antwortimpuls 8 ein gültiges UART-Zeichen ergibt. Insbesondere bleibt das Stopbit impulsfrei und erlaubt so eine sichere Erkennung der Zeichengrenzen.

Für den Fall, dass eine Empfängerlatenszeit von 400 µs für das Aufweckverfahren zu kurz ist, wird das Verfahren mit einer Empfängerlatenzzeit von bis zu 10ms für Endgeräte durchgeführt. Dazu sendet das Servicegerät als Initiator der Kommunikation eine Folge von n_{A} Aufweckzeichen, gefolgt von einer Empfangspause, welche größer als die Latenzzeit von 10ms ≈ 10 Zeichen @ 9600 Bit/s ist. Während der Sendepause ist das Servicegerät optisch empfangsbereit, wobei die max. Empfängerempfindlichkeit spätestens nach 10ms erreicht wird. Da das Endgerät auch nach Ausbleiben von Aufweckimpulsen noch mindestens 10ms (mind. 10 Antwortzeichen @ 9600 Bit/s) lang weiter antwortet, bevor es ein Sync-Zeichen sendet, ist sichergestellt, dass das Servicegerät den Anfang der vom Endgerät empfangenen Botschaft sicher erkennt. Es ist sinnvoll, eine Aufwecksequenzlänge zu wählen, die groß gegenüber der Sendepause ist, aber klein bezüglich der zu erwartenden Reaktionszeit. Ein Tastverhältnis von 10 : 1 bis 50 : 1 scheint hier sinnvoll. Übersteigt die ununterbrochene Aufwecksequenzlänge die zeitlichen Aufwachabstände des Endgeräts, dann gelingt das Aufwecken immer beim ersten Versuch.

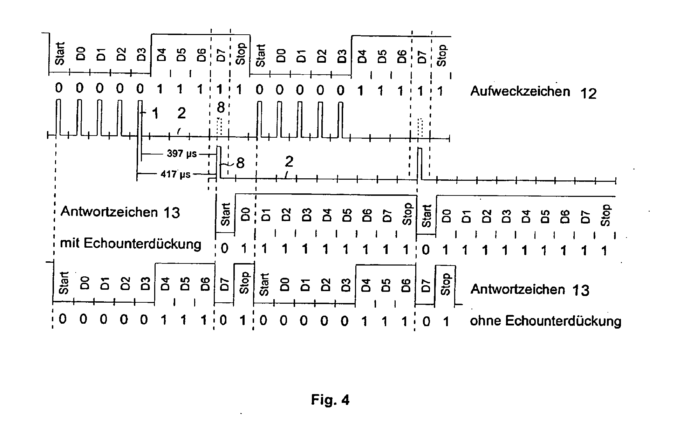

Werden für die optische Schnittstelle des Servicegeräts elektronische Bauteile verwendet, die die elektrische Umwandlung von seriellen Bits in IR-optische Impulse durch Software-Routinen realisieren, ist beim IR-optischen Senden eines 0-Bits häufig während der gesamten Bitdauer keine Bearbeitung von IR-optischen Empfangssignalen möglich. Insbesondere wird die elektrische Ausgabe eines 0-Bits (auf der seriellen RxD-Leitung), das durch eine aufgrund der Software-Verarbeitung entstandene Verlängerung eines empfangenen IrDA-Impulses entstanden ist, unmittelbar abgebrochen, sobald ein 0-Bit auf der TxD-Leitung ansteht. Um zu vermeiden, dass elektrisch verlängerte Leuchtbits der Antwortzeichen (FFh) auf der seriellen Schnittstelle durch eintreffende Startbits der Aufweckzeichen (F0h) abgeschnitten werden, müssen die IR-Antwortimpulse vom Endgerät soweit vorverlegt werden, dass das Senden eines Antwortimpulses 8 keinesfalls bis in das Startbit des nächsten Aufweckzeichens hineinragt. Daher ist das Aussenden des Antwortimpulses 8 mindestens auf die Grenze zwischen letztem Datenbit und dem Stopbit der Aufweckzeichen vorzuziehen. Nur dann ist sichergestellt, dass durch die Software-Verarbeitung die IR-Antwortimpulse elektrisch auf die volle Bitzeit ausgedehnt werden kann und die Auswertung des Antwortzeichens durch den PC-UART korrekt erfolgt. Um zusätzlich Lösungen mit IrDA-Bausteinen ohne Echounterdrückung besser zu unterstützen, sollte der Antwortimpuls bitsynchron im MSB (Datenbit D7) des Aufweckzeichens liegen. Dies stellt sicher, dass die logische Verknüpfung von Aufweckzeichen 12 und Antwortimpuls 8 ein gültiges Zeichen darstellt (F0h = S00001111S → S00001110S = 70h). Dieser Zusammenhang ist in Fig. 4 dargestellt.

Die oberste Kodierung stellt dabei die Sequenz IR-optischer Aufweckzeichen 12 vom Servicegerät zum Endgerät dar (Aufweckimpulsfolge 5 mit Leuchtimpulsen 1). Im Datenbit D7 eines Aufweckzeichens 12 werden die Antwortimpulse 8 des Endgerätes gesendet. Die Kodierung der Aufweckzeichen 13 ist in der mittleren und unteren Kodierung dargestellt, wobei die mittlere Kodierung die Sequenz IR-optischer Antwortzeichen 13 vom Endgerät zum Servicegerät mit Echounterdrückung und die untere Kodierung dieselbe Sequenz ohne Echounterdrückung darstellt. Die IrDA-Antwortimpulse vom Endgerät an das Servicegerät werden in diesem Fall bereits nach 4 Bit = ca. 417µs ab Beginn bzw. 3¹³/₁₆ Bit = ca. 397µs nach dem Ende des letzten Leuchtimpulses 1 (bei ³/₁₆ Bit Impulsbreite) des Aufweckzeichens gesendet.

Alle vorbeschriebenen Varianten lassen ein identisches Endgeräteantwortverhalten zu, so dass im Gesamtkonzept sichergestellt ist, dass notwendige Anpassungen durch neuartige Servicegeräte bzw. Schnittstellen rückwirkungsfrei für die optische Kommunikation der Endgeräte ist, solange diese Spezifikationen eingehalten werden.

Nach dem Beenden der Aufweckimpulsfolge 5 bleibt die erste Kommunikationseinheit (Servicegerät) weiterhin empfangsbereit und wartet auf den Empfang einer optisch kodierten Botschaft von dem Endgerät. Die Botschaft kann u. a. Kommunikationsparameter für die Folgekommunikation enthalten. Ist dies der Fall, dann stellen beide Kommunikationspartner ihre Schnittstellenparameter (Schrittgeschwindigkeit, Zeichenformat, etc.) auf die vom Endgerät vorgegebenen Parameter ein und wickeln die Folgekommunikation mit der neuen Einstellung ab. Sinnvoll bei dieser Variante ist, dass die Aufweckkommunikation an die Anforderungen des am wenigsten leistungsfähigen Endgeräts angepasst ist, d.h. die Schrittgeschwindigkeit der Aufwecksequenz und der Antwort hierauf ist grundsätzlich sehr niedrig. In der Botschaft an den Initiator der Kommunikation kann die max. zulässige Übertragungsgeschwindigkeit für das antwortende Endgerät enthalten sein, sowie optional ein Wert, der die max. zulässige Kommunikationspause spezifiziert, nach deren Ablauf, das Endgerät über einen Aufwecksequenz erneut kommunikationsbereit gemacht werden muss.

Eine weitere Variante des Verfahrens sieht vor, dass das Endgerät nach einer erfolgreichen optischen Kommunikation mit einem Servicegerät für eine definierte Dauer die Aufwachfrequenz seines Wake-Up-Timers erhöht, um bei der Folgekommunikation schneller auf eine Aufweckimpulsfolge 5 reagieren zu können. Fand längere Zeit keine optische Kommunikation mit einem Servicegerät statt, dann schaltet das Endgerät wieder auf seine normale stromsparendere Wake-Up-Frequenz zurück.

Die beschriebenen Verfahren gestatten die Implementierung einer stromsparenden und optimal auf die Leistungsfähigkeit des Endgeräts abgestimmten optischen Kommunikationsinitiierung. Die IR-Schnittstelle des Servicegeräts ist normalerweise so leistungsfähig, dass keinerlei Einschränkungen bezüglich der optischen Übertragungsgeschwindigkeiten und des Strombedarfs für die Kommunikation zu berücksichtigen sind.

Durch die erfindungsgemäße Kommunikationsinitiierung und die anschließende Kommunikation wird nur minimal in die auf Stromsparen ausgelegte Ablaufsteuerung der Endgeräte eingegriffen. Das Verfahren ist unabhängig von der Aufweckfrequenz des Endgeräts und vermeidet so die auf den schlimmsten Fall ausgelegten Aufwecksequenzen konstanter Länge, wie beispielsweise gemäß EN 61107 vorgesehen. Das Verfahren greift auf Seite der Servicegeräte auf die in der Regel vorhandenen IrDA-Komponenten zurück und vermeidet die Bereitstellung zusätzlicher optischer Adapter, wobei auch deren Einsatz durchaus möglich ist. Es nutzt aber insbesondere den komplexen IrDA-Protokollstack nicht und vermeidet auf Endgeräteseite den damit verbundenen programmtechnischen Aufwand. Das Verfahren ist somit auch für einfache Applikationen geeignet und auch anwendbar, wenn ein unterbrechungsfreier Datenstrom nicht garantiert werden kann. Unterbrechungen des Datenstroms können bei nicht echtzeitfähigen Multitasking-Betriebssystemen auftreten, wenn eine zeichenweise Datenübertragung programmtechnisch realisiert wird.

### Bezugszeichenliste:

- 1: Impuls
- 2: Schritttakt
- 3: Zeichen
- 4: Kodierung
- 5: Aufweckimpulsfolge, Aufwecksequenz
- 6: Aufweckzeitpunkt
- 7: Zeitmessung
- 8: Impuls
- 9: Kodierung
- 10: Antwortimpulsfolge
- 11: Abbruchzeitpunkt
- 12: Aufweckzeichen
- 13: Antwortzeichen

## Patentansprüche

1. Verfahren zur optischen Übertragung von binären Daten zwischen zwei Kommunikationseinheiten auf einem optischen Datenübertragungskanal zum Aufwecken einer Kommunikationseinheit, bei dem innerhalb eines Schritttaktes Leuchtimpulse (1, 8) bzw. keine Leuchtimpulse ausgesendet werden und eine erste Kommunikationseinheit als Initiator der Kommunikation eine optische Aufweckimpulsfolge (5) aus einer Folge von Leuchtimpulsen und fehlenden Leuchtimpulsen in dem vorgegebenen Schritttakt aussendet, **dadurch gekennzeichnet, dass** die erste Kommunikationseinheit während des Sendens der optischen Aufweckimpulsfolge (5) für optische Antwortimpulse (8) der auf die Aufweckimpulsfolge (5) reagierenden zweiten Kommunikationseinheit empfangsbereit ist und bei deren Empfang das Aussenden der Aufweckimpulsfolge (5) abbricht.

2. Verfahren nach Anspruch 1, **dadurch gekennzeichnet, dass** die optische Aufweckimpulsfolge (5) regelmäßig leuchtfreie Signalzustände aufweist, in denen die zweite Kommunikationseinheit eine Antwortimpulsfolge (10) sendet.

3. Verfahren nach Anspruch 2, **dadurch gekennzeichnet, dass** die erste Kommunikationseinheit während des optischen Sendens gleichzeitig Leuchtimpulse (1, 8) empfangen kann und bei Empfang von anderen als ihren eigenen Leuchtimpulsen (1, 8) das Aussenden der Aufweckimpulsfolge abbricht.

4. Verfahren nach Anspruch 2, **dadurch gekennzeichnet, dass** die erste Kommunikationseinheit nur während leuchtfreier Signalzustände der Aufweckimpulsfolge (5) Leuchtimpulse (8) empfangen kann und bei Empfang von Leuchtimpulsen (8) das Aussenden der Aufweckimpulsfolge (5) abbricht.

5. Verfahren nach Anspruch 2, **dadurch gekennzeichnet, dass** die Aufweckimpulsfolge (5) aus Teilimpulsfolgen und sich anschließenden sendefreien Pausen aufgebaut ist, wobei in den sendefreien Pausen von optischem Senden auf optisches Empfangen umgeschaltet wird, so dass die erste Kommunikationseinheit Leuchtimpulse (8) empfangen kann und bei Empfang von Leuchtimpulsen (8) das Aussenden der Aufweckimpulsfolge (5) abbricht.

6. Verfahren nach einem der Ansprüche 2 bis 5, **dadurch gekennzeichnet, dass** zwischen dem letzten Leuchtimpuls (1) der Aufweckimpulsfolge (5) vor einer Folge leuchtfreier Signalzustände und dem ersten Leuchtimpuls (8) der Antwortimpulsfolge (10) eine vorgebbare Anzahl leuchtfreier Signalzustände in der Aufweckimpulsfolge (5) abgewartet wird.

7. Verfahren nach einem der vorhergehenden Ansprüche, **dadurch gekennzeichnet, dass** die Aufweckimpulsfolge (5) von der ersten Kommunikationseinheit kontinuierlich ausgesendet wird.

8. Verfahren nach einem der vorhergehenden Ansprüche, **dadurch gekennzeichnet, dass** die von der ersten Kommunikationseinheit gesendete Aufweckimpulsfolge (5) aus einer Folge von Aufweckzeichen (3, 12) besteht, wobei ein Aufweckzeichen (3, 12) eine unterbrechungsfrei im Schrittakt (2) gesendete Folge von mehreren binären Signalzuständen ist und wobei jedes Aufweckzeichen (3, 12) mindestens einen Schritttakt (2) mit einem leuchtfreien Signalzustand aufweist.

9. Verfahren nach Anspruch 8, **dadurch gekennzeichnet, dass** eine Kodierung (4) der Aufweckzeichen (3, 12) derart erfolgt, dass die Aufweckimpulsfolge (5) von der zweiten Kommunikationseinheit in einzelne Aufweckzeichen (3, 12) zerlegt werden kann.

10. Verfahren nach einem der Ansprüche 8 oder 9, **dadurch gekennzeichnet, dass** jedes Aufweckzeichen (3, 12) mindestens zwei Leuchtimpulse (1) bekannten Abstands aufweist.

11. Verfahren nach einem der Ansprüche 8 bis 10, **dadurch gekennzeichnet, dass** die Aufweckimpulsfolge (5) unterbrechungsfrei von der ersten Kommunikationseinheit gesendet wird, wobei die Aufweckzeichen (3, 12) der Aufweckimpulsfolge (5) mindestens einen Leuchtimpuls (1) enthalten, der einen bekannten Abstand zu mindestens einem anderen Leuchtimpuls (1) eines vorangegangenen Aufweckzeichens (3, 12) aufweist.

12. Verfahren nach einem der Ansprüche 8 bis 11, **dadurch gekennzeichnet, dass** das Aufweckzeichen (3, 12) in seinem vorletzten Schritttakt (2) leuchtfrei ist und die zweite Kommunikationseinheit einen Antwortimpuls (8) in diesem leuchtfreien Schritttakt (2) sendet.

13. Verfahren nach einem der Ansprüche 8 bis 12, **dadurch gekennzeichnet, dass** ein Aufweckzeichen (3, 12) je zur Hälfte aus Schritttakten (2) mit Leuchtimpulsen (1) und ohne Leuchtimpulse besteht.

14. Verfahren nach einem der vorhergehenden Ansprüche, **dadurch gekennzeichnet, dass** die erste Kommunikationseinheit vor dem Abbrechen der Aufweckimpulsfolge (5) überprüft, ob die empfangenen Leuchtimpulse (1, 8) Antwortimpulse (8) sind.

15. Verfahren nach einem der vorhergehenden Ansprüche, **dadurch gekennzeichnet, dass** nach Abbruch der Aufweckimpulsfolge (5) eine Kommunikation zwischen der ersten und der zweiten Kommunikationseinheit zur Übertragung binärer Daten stattfindet.

16. Verfahren nach Anspruch 15, **dadurch gekennzeichnet, dass** die auf die Aufweckimpulsfolge (5) der ersten Kommunikationseinheit reagierende zweite Kommunikationseinheit nach Abbruch der Aufweckimpulsfolge (5) eine optisch kodierte Botschaft an die erste Kommunikationseinheit sendet, wobei die Botschaft Kommunikationsparameter enthält und die Kommunikation mit den übertragenen Kommunikationsparametern erfolgt.

17. Verfahren nach einem der vorhergehenden Ansprüche, **dadurch gekennzeichnet, dass** nach einer Kommunikation für eine vorgebbare Zeitdauer eine Aufwachfrequenz der zweiten Kommunikationseinheit erhöht wird oder die zweite Kommunikationseinheit kommunikationsbereit bleibt.

## Claims

1. A method of optically transmitting binary data between two communication units via an optical transmission channel for waking up a communication unit, wherein luminescent pulses (1,8) and no luminescent pulses, respectively, are transmitted within a timed sequence and a first communication unit being the initiator of the communication transmits within the predetermined timed sequence an optical wake-up pulse train (5) out of a train of luminescent pulses and absent luminescent pulses, **characterized in that** the first communication unit, during transmission of the optical wake-up pulse train (5), is ready to receive optical response pulses (8) from the second communication unit responding to the wake-up pulse train (5), with the transmission of the wake-up pulse train (5) being discontinued upon reception thereof.

2. A method according to claim 1, **characterized in that** the optical wake-up pulse train (5) comprises regularly non-luminescent signal states wherein the second communication unit transmits a response pulse train (10).

3. A method according to claim 2, **characterized in that** the first communication unit is able to simultaneously receive luminescent pulses (1, 8) during the optical transmission and to discontinue the transmission of the wake-up pulse train upon reception of luminescent pulses other than its own pulses (1, 8).

4. A method according to claim 2, **characterized in that** the first communication unit is able to receive luminescent pulses (8) only during non-luminescent signal states of the wake-up pulse train (5), discontinuing the transmission of the wake-up pulse train (5) upon reception of luminescent pulses (8).

5. A method according to claim 2, **characterized in that** the wake-up pulse train (5) is made up of partial pulse trains and subsequent non-transmitting breaks, switching over, during the non-transmitting breaks, from optical transmission to optical reception such that the first communication unit is able to receive luminescent pulses (8), discontinuing the transmission of the wake-up pulse train (5) upon reception of luminescent pulses (8).

6. A method according to claims 2 through 5, **characterized in that** a predetermined number of non-luminescent signal states in the wake-up pulse train (5) is awaited between the last luminescent pulse (1) of the wake-up pulse train (5) prior to a train of non-luminescent signal states, and the first luminescent pulse (8) of the response of pulse train (10).

7. A method according to any one of the preceding claims, **characterized in that** the wake-up pulse train (5) is continuously transmitted by the first communication unit.

8. A method according to any one of the preceding claims, **characterized in that** the wake-up pulse train (5) transmitted by the first communication unit is composed of a train of wake-up signs (3, 12), with a wake-up sign (3, 12) being a train of a plurality of binary signal states continuously transmitted within the timed sequence (2), and with each of the wake-up signs (3, 12) comprising at least one timed sequence (2) of a non-luminescent signal state.

9. A method according to claim 8, **characterized in that** the wake-up signals (3, 12) are encoded (4) such that the wake-up pulse train (5) can be decomposed by the second communication unit into individual wake-up signs (3, 12).

10. A method according to any one of claims 8 or 9, **characterized in that** each wake-up sign (3, 12) comprises at least two luminescent pulses (1) spaced in known relationship.

11. A method according to any one of claims 8 through 10, **characterized in that** the wake-up pulse train (5) is continuously transmitted by the first communication unit, with the wake-up signs (3, 12) of the wake-up pulse train (5) containing at least one luminescent pulse (1) spaced in known relationship from at least one other luminescent pulse (1) of a preceding wake-up sign (3, 12).

12. A method according to claims 8 through 11, **characterized in that** the wake-up sign (3,12) in its penultimate timed sequence (2) is non-luminescent, and that the second communication unit transmits a response pulse (8) within the said non-luminescent timed sequence (2).

13. A method according to any one of claims 8 through 12, **characterized in that** a wake-up sign (3, 12) respectively by half is composed of timed sequences (2)having luminescent pulses (1) and no luminescent pulses.

14. A method according to any one of the preceding claims, **characterized in that** the first communication unit, prior to discontinuing the wake-up pulse train (5) will check whether or not the luminescent pulses (1, 8) are response pulses (8).

15. A method according to any one of the preceding claims, **characterized in that** after the wake-up pulse train (5) having been discontinued a communication is effected between the first and the second communication unit for transmitting binary data.

16. A method according to claim 15, **characterized in that** the second communication unit responding to the wake-up pulse train (5) of the first communication unit, after the wake-up pulse train (5) having been discontinued, transmits an optically encoded message to the first communication unit, with the said message containing communication parameters, with the communication taking place with the communication parameters transmitted.

17. A method according to any one of the preceding claims, **characterized in that** after a communication having taken place, a wake-up frequency of the second communication unit is enhanced for a predetermined period of time or the said second communication unit remains in a condition ready for communication.

## Revendications

1. Procédé de transmission des données binaires entre deux unités de communication par l'intermédiaire d'une voie à transmission des données pour réveiller une unité de communication, dans lequel sont transmis pendant un pas cadencé, des impulsions lumineuses (1, 8) ou aucune impulsions lumineuses, une unité de communication première excitant la communication transmettant dans le pas cadencé prédéterminé une série d'impulsions à réveiller (5) optiques d'une suite d'impulsions lumineuses et d'impulsions lumineuses manquées, **caractérisé en ce que** l'unité de communications première pendant la transmission de la série d'impulsions à réveiller (5) optiques pour des impulsions de réponse (8) optiques de l'unité de communication secondaire répondant à la série d'impulsions à réveiller (5) est disposée à réception, la transmission de la série d'impulsions à réveiller (5) étant discontinue à la réception de laquelle.

2. Procédé selon la revendication 1, **caractérisé en ce qu** la série d'impulsions à réveiller (5) optiques comporte des états signaux régulièrement non-lumineuses, dans lesquels l'unité de communication secondaire transmet une série d'impulsions à réponse.

3. Procédé selon la revendication 2, **caractérisé en ce que** l'unité de communication première pendant la transmission optique simultanément reçoit des impulsions lumineuses (1,8) et discontinue la transmission de la série d'impulsions à réveiller à la réception d'autres impulsions lumineuses (1, 8) à l'exception ses impulsions lumineuses en propre.

4. Procédé selon la revendication 2, **caractérisé en ce que** l'unité de communication première reçoit seulement pendant des états signaux non-lumineux de la série d'impulsions à réveiller (5) des impulsions lumineuses (8) et à la réception des impulsions lumineuses (8) discontinue la transmission de la série d'impulsions à réveiller.

5. Procédé selon la revendication 2, **caractérisé en ce que** la série d'impulsions à réveiller (5) est formée des suites d'impulsions partielles et des intervalles joints non-transmettant, en renversant dans les intervalles non-transmettant de la transmission optique à la réception optique de sorte que l'unité de communication première reçoit des impulsions lumineuses (8) et discontinue la transmission de la série d'impulsions à réveiller (5) à la réception des impulsions lumineuses (8).

6. Procédé selon l'une des revendications 2 à 5, **caractérisé en ce qu'**un nombre défini d'états signaux non-lumineux de la série d'impulsions à réveiller (5) est attendu entre l'impulsion lumineuse (1) dernière de la série d'impulsions à réveiller (5) avant une série des états signaux non-lumineux et l'impulsion lumineuse (8) première de la série d'impulsions à réponse (10).

7. Procédé selon l'une des revendications précédentes, **caractérisé en ce que** la série d'impulsions à réveiller (5) est transmise continuellement par l'unité de communication première.

8. Procédé selon l'une des revendications précédentes, **caractérisé en ce que** la série d'impulsions à réveiller (5) transmise par l'unité de communication première est composée d'une série de signes à réveiller (3,12), l'un signe à réveiller (3, 12) étant une suite d'états signaux binaires transmise sans interruption dans la période cadencée (2) et chaque signe à réveiller (3, 12) comporte au moins une période cadencée (2) d'un état signal non-lumineux.

9. Procédé selon la revendication 8, **caractérisé en ce que** les signes à réveiller (3, 12) sont codifiés de sorte que la série d'impulsions à réveiller (5) peut être décomposée par l'unité de communication secondaire aux signes (3, 12) à réveiller individuels.

10. Procédé selon l'une des revendications 8 ou 9, **caractérisé en ce que** chaque signe à réveille (3,12) comporte au moins deux impulsions à réveiller (1) d'un espace connu.

11. Procédé selon l'une des revendications 8 à 10, **caractérisé en ce que** la suite d'impulsions à réveiller (5) est transmise sans interruption par 1' unité de communication première, les signes à réveiller (3, 12) de la série d'impulsions à réveiller (5) contenant au moins une impulsion lumineuse (1) d'un espace connu au moins d'une autre impulsion lumineuse (1) d'un signe à réveiller (3,12) précédent.

12. Procédé selon l'une des revendications 8 à 11, **caractérisé en ce que** le signe à réveiller (3, 12) dans sa période cadencée (2) avant-dernière est non-lumineux et l'unité de communication secondaire transme une impulsion à réponse (8) dans ladite période cadencée (2) non-lumineuse.

13. Procédé selon l'une des revendications 8 à 12, **caractérisé en ce qu'**un signe à réveiller (3, 12) à moitié est formé des pas cadencés (2) ayant des impulsions lumineuse (1) et à l'autre moitié des pas cadencés sans des impulsions lumineuses.

14. Procédé selon l'une des revendications précédentes, **caractérisé en ce que** l'unité de communication première avant l'interruption de la suite d'impulsions à réveiller (5) vérifie si les impulsions lumineuses (1, 8) reçues sont des impulsions à réponse (8).

15. Procédé selon l'une des revendications précédentes, **caractérisé en ce qu'**après l'interruption de la suite d'impulsions à réveiller (5) une communication va lieu entre l'unité de communication première et l'unité de communication secondaire pour la transmission des données binaires.

16. Procédé selon la revendication 15, **caractérisé ce que** l'unité de communication secondaire répondant à l'unité de communication première après l'interruption de la série d'impulsions à réveiller (5) transmet une information codifiée à l'unité de communication première, ladite information contenant des communications paramétriques et la communication s'effectuant avec les paramètres de communication transmis.

17. Procédé selon l'une des revendications précédentes, **caractérisé en ce qu'**après une communication pour une durée définie une fréquence à réveiller de l'unité de communication secondaire est élevée ou l'unité de communication reste disposée à communication.
